# EUROPEAN PATENT APPLICATION

(11) **EP 2 526 766 A1**
(43) Date of publication of application: **28.11.2012**
(21) Application number: 11167717.5
(22) Date of filing: 26.05.2011
(51) Int. Cl.: A01L 7/10

(54) **Nail for a horse shoe**

(71) Applicant: Mustad Netherlands B.V., 9206 AZ Drachten (NL)
(72) Inventor: Stelin, Carlos, 66010 Dals Långed (SE)
(74) Representative: Grootscholten, Johannes A.M.

(57) **Abstract**

The present invention relates to a nail (12) for a horse shoe (13). The novel and inventive nail comprises a shaft (2) with a head (3) at one end of the shaft. The other end of the shaft is provided with a point (4) opposite of the head. The head is arranged via a neck (5) on the shaft and comprises a crown (14).
The present horse shoe nail distinguishes itself over conventional horse shoe nails in that it comprises a convex element of or on the crown.
Thus improved directability and wear are provided, amongst other beneficial properties.

## Description

The present invention relates to a nail for a horse shoe, the nail comprising a shaft with a head at one end of the shaft and with a point at an opposite end of the shaft, wherein the head is arranged via a neck on the shaft and comprises a crown, and assembly of said nail with a horse shoe and use of the nail.

Such horse shoe nails are commonly known, as for instance shown in figures 1 and 2. Also known are horse shoe nails without a crown, for instance as shown in figures 3 and 4.

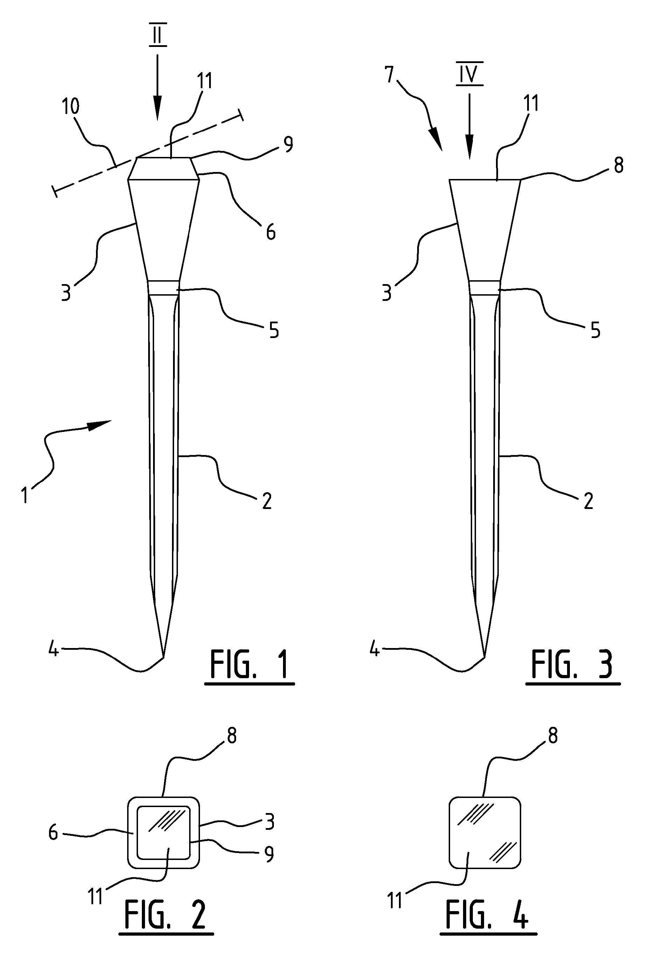

In figures 1 and 2, a nail 1 for a horse shoe comprises a shaft 2 with a head 3 at one end of the shaft 2 and with a point 4 at an opposite end of the shaft 2, wherein the head 3 is arranged via a neck 5 on the shaft 2. Further, the head 3 of the nail 1 comprises a crown 6. The prior art horse shoe nail 7 in figures 3 and 4 is missing the crown 6 of the nail in figures 1 and 2. The top of crown 6 or the top of the head 3 forms an impact (absorbing) surface for striking blows with (a schematically represented striking surface of) a hammer 10.

The known nails 1, 7 offer to a blacksmith an impact (absorbing) surface enclosed by an edge 8 of the head in the nail 7 of figures 3 and 4 and/or an edge 9 of the crown in the nail 1 according to figures 1 and 2.

A blacksmith normally wants to arrange a nail to secure a horse shoe obliquely outward in such a manner that the nail exits the hoof wall. This is the safest way to avoid injuring the horse; the blacksmith has to take particular care not to "quick" the horse, i.e. hammer a nail into the sensitive portion or structure of the hoof. To avoid injury to the horse with certainty, the objective is to drive the nail outward in the direction off the hoof wall. Notwithstanding this knowledge, accidents have happened, where a nail is struck into the sensitive structure of the hoof or at least not in a desired direction through the hoof (for example towards the radial outside of the hoof, i.e. the hoof wall).

The present invention is directed at decreasing, if not obviating, the above mentioned blacksmith's problems by providing an improved nail, that is distinguished over the prior art horse shoe nails by a convex element of or on the crown.

It has surprisingly been realised by the inventors of the present invention, that the prior art nails with a crown 6 exhibit sharp edges, in particular edge 9 of the crown 6, which defines/encompasses a smaller impact absorbing surface 11 than the - also relatively sharp - edge 8 of head 3 in figures 3 and 4. When striking the hammer on this edge 8 or 9, as shown schematically in figure 1, the likelihood of striking the nail at an angle - rather than head on - is larger for a smaller impact absorbing surface 11 of the nail, such as the top surface of the crown 6 which top surface is encompassed by the edge 9.

A logical solution would be to enlarge the impact absorbing surface 11 of the crown 6, for instance to the size of the impact surface of the nail in figures 3 and 4. Moreover, it is noted here that the technical field of horse shoeing can often be considered as quite traditional.

However, as a novel and inventive feature to decrease, alleviate or even obviate the blacksmith's problems when shoeing a horse (or a donkey, mule of zebra or the like), the inventors have developed the nail having the convex impact surface defined by the convex element formed on or by or of the crown 6.

Thereby a material saving is realised relative to the above suggested logical and obvious solution of enlarging the impact surface of the crown 6 to the size of the top circumference of the head 3. Moreover, the sharp edge 9 of the crown 6 in figures 1 and 2 acts to emphasize any misdirection of a blow with a hammer 10 to a nail 1, precisely because the area of the impact absorbing surface relatively very small compared with that that of the head 3 as in figures 3 and 4. This edges 9 is referred to as "sharp" in that the edge forms a relatively abrupt discontinuity - when moving over the crown of the nail - in relation to the size and shape of the striking surface of the hammer 10 and/or to the area of the top of the head 3. Consequently, an imperfectly placed blow with the hammer on edge 9 of nail 1 in figures 1 and 2 may result in a radial force component relative to the longitudinal direction of the nail 1, driving the nail sideways relative to the intended and desired direction, possibly driving the nail away from the envisaged direction, which envisaged driving direction is for instance towards the outside of the side surface of the hoof. Likewise the conventionally relatively sharp edge 8 can emphasize any misdirection of a blow with a hammer 10 on the nail to advance the nail away from the desired direction. The convex element of the crown provides a smooth, evenly curved or arcuate shape of the impact surface of the nail, and thus a slightly imperfectly directed blow to the impact surface of the nail will not lead to a misdirection of the advance of the nail into the hoof, as was the case with the prior art nails 1, 7. Quite the opposite is the case: the novel and inventive horse shoe nail and more in particular the convex element thereof results in an improvement in the direction in which the nail is driven into a hoof, practically regardless of the imprecision with which the nail is struck with the hammer.

Further to the inventive effect that the convex element centers the forces passed onto the nail when hammering, thereby improving the drivability of the nail, it is noted here that the convex element makes it easier for farriers to hit the nail. The nail can only be hit on the centre of the head, not on any sharp edges 8 or 9 or head angle anymore, since there are no angles. Thus, less of a choice needs to be made regarding where to hit the nail on the head; precision for hammering can be less, whilst securing a precisely positioned nail. If this "centered drive" is combined with a slight "pitch" on the neck ensuring the nail naturally follows the slope of the hoof, this results in even better drivability of the horse shoe nail according to the present invention. Horse shoe nails having the convex element according to the invention will then practically automatically exit of the hoof wall where they are intended to do so, aligned with other nails.

In addition it is noted here that the invention results in a more aesthetic nail and/or a more elegant final result. The horse shoe nail with a convex element makes the nail itself but also the shod horseshoe and/or the horse's foot look much more elegant than a classical nail would. This is a relevant attribute in disciplines where aesthetics are considered to be very relevant. Thus it is expected the novel horse shoe according to the present invention will also have a considerable attraction on farriers, who consider that work aesthetics shows work quality. The convex element of the horse shoe nail according to the invention contributes to prove the overall quality and to improve the final look of the shoeing job, and can be as such shown / sold to farriers' customers.

Yet further, the novel horse shoe nail having the convex element provides increased safety for the horse, since there is no risk for a horse to injure itself with an acute nail head angle, in case the nail is protruding (too much) from the shoe nail crease. The convex element having a rounded shape will offer less resistance against the ground or pavement than classical heads. Again yet further, the horse shoe nail having the convex element exhibits an increased wear resistance. Therefore, Arc nails are expected to exhibit improved wear relative to conventional other nails.

Preferred embodiments of the present invention are defined in the dependent ones of the appended set of claims. For example the convex element of the crown viewed in any radial direction relative to the longitudinal direction of the shaft has any one or more forms from the group, comprising an arcuate form, a smooth form, a smoothly varying form, a form that corresponds in shape with a part of a circumference of a circle, etcetera.

Further, as an alternative or additional embodiment the head and the convex element of the crown of the nail viewed in axial direction relative to the longitudinal direction of the shaft define one or more shape from the group, at least comprising a rectangular circumferential shape. In such an embodiment, the head and the convex element may even define a square circumferential shape, an oval circumferential shape, a circular circumferential shape, etcetera.

As an alternative or in addition, the nail according to the invention may exhibit the feature that an outward oriented surface of the convex element forms an impact absorbing surface for a hammer having a striking surface, wherein the impact absorbing surface is at least one of smooth, large, et cetera in relation to the striking surface of the hammer.

The shape absorbing surface of the crown of the nail is most particularly such that the impact force is focussed or concentrated in the longitudinal direction of the nail. To this end, as an alternative or in addition, the nail according to the invention may exhibit the feature that an outward oriented surface of the convex element forms an impact absorbing surface for a hammer having a striking surface, wherein the impact absorbing surface has tangent lines and/or planes that, when moving over the impact absorbing surface, exhibit changes in direction that are at most small enough relative to a size and a shape of the striking surface of the hammer to direct a maximum of impact force when struck by the hammer in a longitudinal direction of the nail.

Further the present invention relates to an assembly of a horse shoe and at least one nail in accordance with the invention and/or a use of a nail according to the invention or of an assembly according to the invention. Such a method may entail arranging a horse shoe on a horse's hoof, comprising positioning the horse shoe against the hoof, and fixing the horse shoe to the hoof employing at least one nail and striking the at least one nail through the horse shoe into the hoof with a hammer.

The present invention will be further elucidated herein below on the basis of an exemplary embodiment as shown in the accompanying drawing, which is intended to only show an example of a nail according to the present invention without limitation to the specifically represented embodiment, since only the patent claims serve to limit the scope of protection, and wherein the same or similar reference number are used to identify the same or similar elements, components, functionalities, structures, et cetera, and in which:
Fig.'s 1 - 4 show schematic representations of nails 1, 7 according to the prior art; and
Fig.'s 5 - 8 show separate views of an embodiment of a nail according to the present invention from separate perspectives.

The prior art horse shoe nails of figures 1 - 4 have been described above.

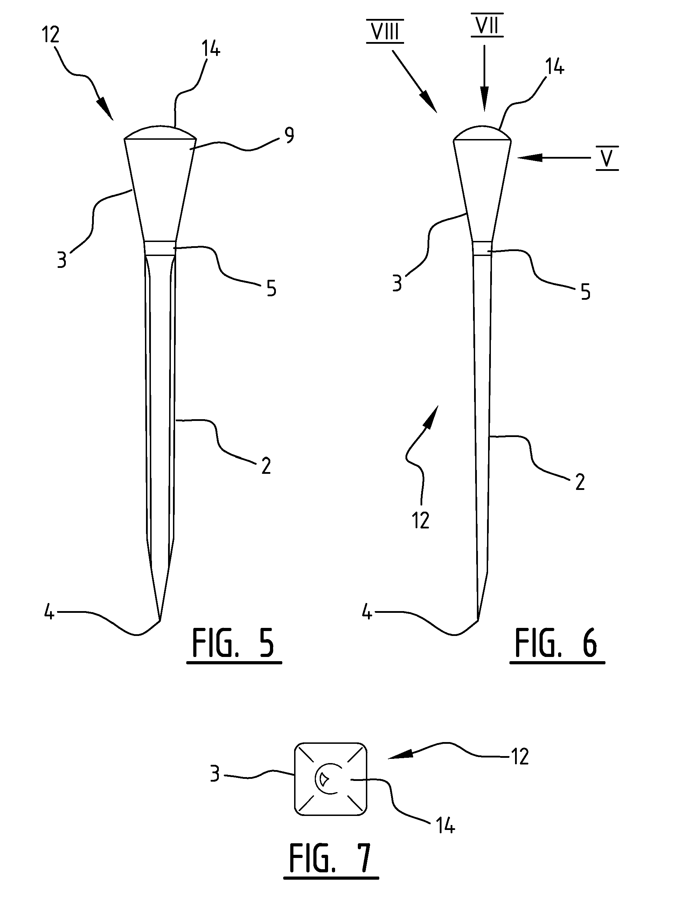

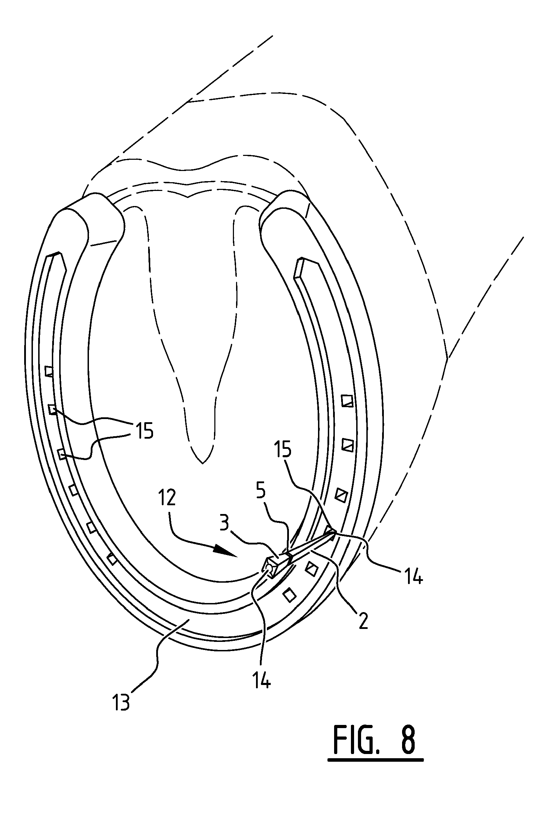

The horse shoe nail 12 according to the present invention as shown in figures 5 - 8 comprises in addition to the prior art nail 1, 7 of figures 1 - 4 that a crown 14 thereof has or is a convex element. Figure 5 shows nail 12 in side view, figure 6 shows nail 12 in a view along arrow VI in figure 5, figure 7 shows a view along arrow VII in figure 6, and figure 8 shows a perspective view along arrow VIII in figure 6.

The nail 12 of figure 5 - 8 is intended to be used for fixing a horse shoe 13 to a hoof of a horse (or mule, donkey or a zebra, and the like, even), where an assembly with a part of a horse shoe 13 is as shown in figure 8. Figure 8 shows a perspective view of a nail 12 according to the invention along arrow VIII in figure 6. For assembling the horse shoe 13 and the horse shoe nail 12 on the hoof of a horse, the nail 12 is driven through a hole 15 in the horse shoe 13 using a hammer 10, like the one schematically shown in figure 1. A part of the horse shoe 13 is schematically shown in the view of figure 8, and the nail 12 according to the invention is driven through the horse shoe 13 and into the hoof of the horse using the hammer 10.

The convex element crown 14 has an arcuate form, without any too abrupt discontinuities like the relatively sharp edge 9 of the crown 6 of the nail 1 in figures 1 and 2. The convex element 14 is smooth and arcuate in that thereby force of a blow with the hammer 10 on the nail 12 is maximally focussed or directed in the longitudinal irection of the nail 12. It is self evident that thereby the radial component of a strike force resulting from an imperfectly placed blow with a hammer 10 will reduce relative to a prior art nail having a crown 6 as in figures 1 and 2 with the relatively sharp edge 9 surrounding a relatively small impact absorbing area.

The convex element of or forming the crown 14, when viewed in any radial direction relative to the longitudinal direction of the shaft, could have, as an alternative or in addition to the arcuate form according to figures 5 - 8, any one or more forms from the group, comprising a smooth form, a smoothly varying form, a form that corresponds in shape with a part of a circumference of a circle, a bulge, etcetera.

Figure 7 shows a top view along arrow VII in figure 6 of the head 3 and crown 14 of a nail according to the present invention as having an approximately square shape. Further, as an alternative or additional embodiment the head 3 and the convex element of or forming the crown 14 of the nail 12 viewed in head-on axial direction relative to the longitudinal direction of the shaft can define one or more shape from the group, at least comprising a rectangular circumferential shape. In alternative embodiments, the head 3 and the convex element of or forming the crown 14 may even define an oval circumferential shape, a circular circumferential shape, et cetera.

As an alternative or in addition, the nail 12 according to the invention may exhibit the feature that an outward or rather upward oriented (impact absorbing) surface of the convex element of or forming the convex crown 14 forms an impact absorbing surface for a hammer 10 having a striking surface, wherein the impact absorbing surface is at least one of smooth, large, et cetera in relation to the striking surface of the hammer 10. Thereby the radial component of a driving force on the nail 12 resulting from a blow with the hammer 10 will be reduced, relative to the sharp form of the edge 9 of crown 6 in figures 1 and 2.

Consequently, the shape of the impact absorbing surface of the crown 14 of the nail 12 is most particularly and preferably such, that the impact force is maximally focussed or concentrated in the longitudinal direction of the nail 12. To this end, as an alternative or in addition, the nail 12 according to the invention can exhibit the feature that an outward or rather upward oriented (impact absorbing) surface of the convex element of or forming the crown 14 forms an impact absorbing surface for a hammer 10 having a striking surface 10, wherein the impact absorbing surface defined by the convex element crown 14 has tangent lines and/or planes that, when moving over the impact absorbing surface, exhibit changes in direction that are at most small enough relative to a size and a shape of the striking surface of the hammer, to direct a maximum of impact force when struck by the hammer 10 in essentially (but perhaps not entirely) a longitudinal direction of the nail 12.

Further the present invention relates to an assembly of a horse shoe 13 and at least one nail 12 as shown in figure 8 and in accordance with the invention and/or a use of a nail 12 according to the invention or of an assembly 12, 13 according to the invention. Such a method may entail arranging a horse shoe 13 on a horse's hoof, comprising positioning the horse shoe 13 against the hoof, and fixing the horse shoe 13 to the hoof employing at least one nail 12 according to the present invention and striking the at least one nail 12 through (a hole 15 of) the horse shoe 13 into the hoof with a hammer 10.

Needless to say, the present invention naturally also relates to horse shoe nails, assemblies of such nails and use of the nails and/or assemblies in relation to other animals, such as donkeys, mules, zebra's and the like.

The invention is by no means limited to the shown and specifically described embodiments, but is only bound by the limitations from the independent of the appended claims. For instance the rounded convex element is combined with a slight "pitch" on the neck ensuring the nail naturally follows the slope of the hoof, which results in even better drivability for a nail according to the invention. Such a pitch defines an angle between the longitudinal axis through the head and a longitudinal axis through the shaft.

## Claims

1. A nail for a horse shoe, comprising a shaft with a head at one end of the shaft and with a point at an opposite end of the shaft, wherein the head is arranged via a neck on the shaft and comprises a crown, and
**CHARACTERIZED BY**
a convex element of or on the crown.

2. The nail of claim 1, wherein the convex element of the crown viewed in any radial direction relative to the longitudinal direction of the shaft has an arcuate form.

3. The nail of claim 1 or 2, wherein the convex element of the crown of the nail viewed in any radial direction relative to the longitudinal direction of the shaft has a smooth form.

4. The nail of any one of the preceding claims, wherein the convex element of the crown of the nail viewed in any radial direction relative to the longitudinal direction of the shaft corresponds in shape with a part of a circumference of a circle.

5. The nail of any one of the preceding claims, wherein the head and the convex element of the crown of the nail viewed in axial direction relative to the longitudinal direction of the shaft define a rectangular circumferential shape.

6. The nail of claim 5, wherein the head and the convex element define a square circumferential shape.

7. The nail of any one of the preceding claims, wherein an outward oriented surface of the convex element forms an impact absorbing surface for a hammer having a striking surface, wherein the impact absorbing surface is smooth in relation to the striking surface of the hammer.

8. The nail of any one of the preceding claims, wherein an outward oriented surface of the convex element forms an impact absorbing surface for a hammer having a striking surface, wherein the impact absorbing surface has tangent lines and/or planes that, when moving over the impact absorbing surface, exhibit changes in direction that are at most small enough relative to a size and a shape of the striking surface of the hammer to direct a maximum of impact force when struck by the hammer in a longitudinal direction of the nail.

9. The nail according to any one of the preceding claims, comprising a pitch on the neck ensuring the nail naturally follows the slope of the hoof, which defines an angle between the longitudinal axis through the head and a longitudinal axis through the shaft

10. An assembly of a horse shoe and at least one nail in accordance with at least one of the preceding claims.

11. Use of a nail according to any one of the preceding claims 1 - 9 or of an assembly according to claim 10, for arranging a horse shoe on a horse's hoof, comprising positioning the horse shoe against the hoof, and fixing the horse shoe to the hoof employing at least one nail and striking the at least one nail through the horse shoe into the hoof with a hammer.
